# EUROPÄISCHE PATENTSCHRIFT

(11) **EP 4 348 304 B1**
(45) Veröffentlichungstag und Bekanntmachung des Hinweises auf die Patenterteilung: **19.08.2026**
(21) Anmeldenummer: 22718063.5
(22) Anmeldetag: 05.04.2022
(51) Int. Cl.: G01S 13/87, G01S 13/89, G01S 13/931, G01S 15/87, G01S 15/931, G01S 13/46, G01S 15/46

(54) **VERFAHREN ZUR BESTIMMUNG DER LAGE EINES OBJEKTS**
METHOD FOR DETERMINING THE POSITION OF AN OBJECT
PROCÉDÉ DE DÉTERMINATION DE LA POSITION D'UN OBJET

(30) Priorität: 28.05.2021 DE 102021205477
(43) Veröffentlichungstag der Anmeldung: 10.04.2024
(73) Patentinhaber: AUMOVIO Autonomous Mobility Germany GmbH, 85057 Ingolstadt (DE)
(72) Erfinder: REICHARDT, Benjamin, 90411 Nürnberg (DE)
(74) Vertreter: Aumovio Corporation
(86) Internationale Anmeldenummer: PCT/DE2022/200065
(87) Internationale Veröffentlichungsnummer: WO 2022/247997

(56) Entgegenhaltungen:
- EP-B1- 2 887 093
- WO-A1-2021/024433
- JP-A- 2003 194 938
- JP-A- 2019 053 005
- JP-B2- 3 391 086

## Beschreibung

Die Erfindung betrifft ein Verfahren und ein System zur Bestimmung der Position und der zumindest abschnittsweisen Form eines Objekts durch eine entfernungsmessende Sensorik eines Fahrzeugs.

Es ist grundsätzlich bekannt, die Lage von Objekten im Umgebungsbereich eines Fahrzeugs mittels mehrerer Sensoren, die lediglich eine Entfernungsmessung, nicht aber eine Richtungsbestimmung ermöglichen, und einem Tracking-Verfahren, bei dem Reflexionen in mehreren aufeinanderfolgenden Sende-Empfangszyklen ermittelt werden, zu bestimmen.

In EP 2 887 093 B1 wird ein Verfahren zum Klassifizieren eines Objekts in einem Umgebungsbereich eines Kraftfahrzeugs mittels einer Sensoreinrichtung des Kraftfahrzeugs beschrieben. Dazu werden von zumindest zwei voneinander unterschiedlichen Sensorpositionen aus jeweilige Entfernungswerte zu dem zu klassifizierenden Objekt durch die Sensoreinrichtung erfasst. Das Klassifizieren erfolgt in Abhängigkeit von den zumindest zwei Entfernungswerten dahingehend, dass bei dem Objekt zumindest zwischen einem punktförmigen Objekt und einem ausgedehnten Objekt unterschieden wird. Die zumindest zwei Sensorpositionen sind voneinander unterschiedliche Positionen desselben Abstandssensors der Sensoreinrichtung, wobei die zumindest zwei Entfernungswerte durch den Abstandssensor zu unterschiedlichen Zeitpunkten während einer Bewegung des Kraftfahrzeugs erfasst werden. Durch die Sensoreinrichtung wird überprüft, ob bezüglich der zumindest zwei Entfernungswerte ein vorbestimmtes Kriterium erfüllt ist, und die zumindest zwei Entfernungswerte werden nur unter der Voraussetzung des Erfülltseins des vorbestimmten Kriteriums zur Klassifizierung des Objekts ausgewertet. Weiterhin wird beim Überprüfen des Erfülltseins des vorbestimmten Kriteriums zusätzlich zu den zumindest zwei Entfernungswerten zumindest ein Abstand zwischen den zumindest zwei Sensorpositionen, aufgrund einer durch das Kraftfahrzeug zwischen den Zeitpunkten der Erfassung der Entfernungswerte zurückgelegten Wegstrecke, berücksichtigt. Das vorgegebene Kriterium umfasst dabei die Bedingung: Rₛ - R_{B} + d > rₛ + r_{B}, wobei Rs den kleineren der Entfernungswerte, R_{B} den größeren der Entfernungswerte, d den Abstand zwischen den Sensorpositionen, rₛ den Messfehler des kleineren Entfernungswerts und rs den Messfehler des größeren Entfernungswerts bezeichnen.

Weitere Verfahren zum Bestimmen einer Position und/oder einer Form eines Objekts relativ zu einem Fahrzeug mittels einer oder mehrerer Abstandssensoren des Fahrzeugs werden in JP 2019 053005 A, WO 2021/024433 A1, JP 3 391086 B2 und JP 2003 194938 A1 beschrieben.

Bekannte Verfahren bestimmen zu den einzelnen Messungen, d.h. den jeweiligen Sende-Empfangszyklen, einen Kreisbogen, wobei der Radius des Kreisbogens von der Laufzeit des Signals zwischen dem Sende- und dem Empfangszeitpunkt abhängt. Anschließend werden die aus einer Vielzahl von unterschiedlichen Messungen erhaltenen Kreisbögen miteinander korreliert, um die Position und die zumindest abschnittsweise Form eines Objekts, beispielsweise die Seitenkontur eines parkenden Fahrzeugs, zu bestimmen.

Problematisch bei bekannten Verfahren ist, dass diese sehr rechenintensiv sind und die Korrelation der von unterschiedlichen Messungen erhaltenen Kreisbögen derart, dass sich diese auf ein einziges Objekt beziehen oder nicht, einer relativ hohen Fehlerrate unterliegt.

Ausgehend hiervon ist es Aufgabe der Erfindung, ein Verfahren zur Bestimmung der Position und der zumindest abschnittsweisen Form eines Objekts anzugeben, das eine reduzierte Rechenkomplexität bei gleichzeitig hoher Robustheit und Verlässlichkeit aufweist.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Bestimmung der Position und der zumindest abschnittsweisen Form eines Objekts ist Gegenstand des nebengeordneten Patentanspruchs 10.

Gemäß einem ersten Aspekt bezieht sich die Erfindung auf ein Verfahren zur Bestimmung der Position und der zumindest abschnittsweisen Form eines Objekts. Das Fahrzeug weist eine Sensorik mit zumindest einem entfernungsmessenden Sensor auf. Das Verfahren umfasst die folgenden Schritte:
Zunächst werden mehrere zeitlich aufeinanderfolgende Sende-Empfangszyklen durch die Sensorik durchgeführt. Vorzugsweise bewegt sich das Fahrzeug. Damit werden die zeitlich aufeinanderfolgende Sende-Empfangszyklen von unterschiedlichen Sensorpositionen aus vorgenommen, so dass sich eine Erfassung der Umgebung aus unterschiedlichen Positionen ergibt. Jeder Sende-Empfangszyklus umfasst das Aussenden eines Messsignals durch zumindest einen Sensor und das Empfangen eines reflektierten Anteils dieses Messsignals durch einen Sensor. Dabei kann der empfangende Sensor gleich dem sendenden Sensor sein oder aber der empfangende Sensor unterschiedlich zu dem sendenden Sensor sein.

Anschließend wird pro Sende-Empfangszyklus ein Kreisabschnitt oder Kreisringabschnitt bestimmt, auf dem ein Objektabschnitt des Objekts liegt, an dem eine Reflexion des Messsignals erfolgt. Der Kreisabschnitt oder Kreisringabschnitt wird basierend auf der Laufzeit zwischen dem Aussenden des Messignals und dem Empfangen eines reflektierten Anteils dieses Messsignals und dem Erfassungsbereich des zumindest einen Sensors bestimmt. Insbesondere wird der Radius des Kreisabschnitts oder des Kreisringabschnitts basierend auf der Laufzeit zwischen dem Aussenden des Messignals und dem Empfangen eines reflektierten Anteils dieses Messsignals bestimmt. Die umfangsseitige Erstreckung des Kreisabschnitts oder des Kreisringabschnitts wird basierend auf dem Erfassungsbereich des zumindest einen Sensors bestimmt.

Daraufhin werden zumindest drei Kreisabschnitte oder Kreisringabschnitte einer Kette von unmittelbar aufeinanderfolgenden Kreisabschnitten oder Kreisringabschnitten korreliert. "Unmittelbar aufeinanderfolgend" bedeutet dabei, dass die Kreisabschnitte oder Kreisringabschnitte basierend auf Messungen eines Sensors bei Bewegung des Fahrzeugs erzeugt wurden und sich auf zeitlich unmittelbar aneinander anschließende Messungen beziehen. Falls die Messungen von unterschiedlichen Sensoren stammen, können die unmittelbar aufeinanderfolgenden Kreisabschnitte oder Kreisringabschnitte auch von direkt benachbarten Sensoren zeitgleich oder im Wesentlichen zeitgleich ermittelt werden.

Basierend auf den zumindest drei Kreisabschnitten oder Kreisringabschnitten werden jeweils zumindest ein Schnittpunkt und zumindest eine Tangente oder zwei Tangenten zwischen den jeweils direkt aufeinanderfolgenden Kreisabschnitten oder Kreisringabschnitten bestimmt.

Anschließend werden die Kreisabschnitte oder Kreisringabschnitte umfangsseitig auf Teilbereiche, in denen der Objektabschnitt liegt, basierend auf den Schnittpunkten und den Tangenten begrenzt. In anderen Worten werden damit entweder ein Schnittpunkt und eine Tangente oder zwei Tangenten zwischen zwei direkt aufeinanderfolgenden Kreisabschnitten oder Kreisringabschnitten dazu verwendet, die Kreisabschnitte oder Kreisringabschnitte umfangsseitig einzugrenzen, so dass nicht mehr angenommen wird, dass ein Objektabschnitt in dem gesamten Kreisabschnitt oder Kreisringabschnitt, der sich über den gesamten umfangsseitigen Erfassungsbereich des Sensors erstreckt, liegt, sondern in einem umfangsseitig, d.h. winkelmäßig reduzierten Teilbereich des Erfassungsbereichs.

Zuletzt wird die Position und die zumindest abschnittsweise Form des Objekts basierend auf den Teilbereichen der Kreisabschnitte oder Kreisringabschnitte bestimmt.

Die Alternativen "Kreisabschnitt oder Kreisringabschnitt" bedeuten, dass es sich entweder um einen Kreisabschnitt handeln kann, dessen Radius sich aufgrund der exakt gemessenen Laufzeit zwischen Sende- und Empfangszeitpunkt ergibt, oder dieser Kreisabschnitt aufgrund von Streuung und/oder Ungenauigkeiten bei den Messungen zu einem Kreisringabschnitt mit einer gewissen radialen Breite wird. Die umfangsseitige, d.h. winkelmäßige Erstreckung des Kreisabschnitts oder Kreisringabschnitts ist identisch und wird durch den Erfassungswinkel des jeweiligen Sensors festgelegt.

Der technische Vorteil des erfindungsgemäßen Verfahrens besteht darin, dass durch die umfangsseitige Reduktion des Erfassungsbereichs auf einen Teilbereich desselben die Rechenkomplexität deutlich reduziert wird, dabei aber gleichzeitig eine hohe Robustheit und Verlässlichkeit des Tracking-Verfahrens erreicht wird. Der Erfindung liegt die Erkenntnis zu Grunde, dass Umgebungsobjekte in den allermeisten Fällen entweder eine gerade oder konvex gewölbte Außenkontur aufweisen, wobei "konvex gewölbt" auch nach außen gerichtete Ecken bzw. Kanten miteinschließt. Auf Basis dieser Erkenntnis kann der Erfassungsbereich vorteilhafterweise eingeschränkt werden, ohne dabei die Detektion von Objekten über Gebühr einzuschränken.

Gemäß einem Ausführungsbeispiel wird ein äußerer Kreisabschnitt oder Kreisringabschnitt der Kette von unmittelbar aufeinanderfolgenden Kreisabschnitten oder Kreisringabschnitten umfangsseitig dadurch beschränkt, dass sich der beschränkte Teilbereich zwischen einem Berührpunkt des äußeren Kreisabschnitts oder Kreisringabschnitts mit einer zwischen dem äußeren Kreisabschnitt oder Kreisringabschnitt und dem unmittelbar darauffolgenden Kreisabschnitt oder Kreisringabschnitt verlaufenden Tangente und einem Schnittpunkt zwischen dem äußeren Kreisabschnitt oder Kreisringabschnitt und dem unmittelbar darauffolgenden Kreisabschnitt oder Kreisringabschnitt erstreckt. Der Bereich zwischen dem Berührpunkt und dem Schnittpunkt schränkt den Kreisabschnitt oder Kreisringabschnitt auf einen für das Objekt-Tracking relevanten Bereich ein, wenn von der Annahme ausgegangen wird, dass ein Objekt keine konkaven Bereiche bzw. nach innen gewandten winkelartigen Vertiefungen oder Ecken aufweist.

Unter "äußerem Kreisabschnitt oder Kreisringabschnitt" wird ein Kreisabschnitt oder Kreisringabschnitt verstanden, der nur einen benachbarten Kreisabschnitt oder Kreisringabschnitt aufweist, d.h. am Rand der Kette von unmittelbar aufeinanderfolgenden Kreisabschnitten oder Kreisringabschnitten liegt.

Unter "innerem Kreisabschnitt oder Kreisringabschnitt" wird ein Kreisabschnitt oder Kreisringabschnitt verstanden, der zu beiden Seiten einen direkt benachbarten Kreisabschnitt oder Kreisringabschnitt aufweist, d.h. zwischen zwei Kreisabschnitten oder Kreisringabschnitten der Kette von unmittelbar aufeinanderfolgenden Kreisabschnitten oder Kreisringabschnitten liegt.

Gemäß einem Ausführungsbeispiel weist der Kreisringabschnitt einen Innenradius und einen Außenradius auf, wobei der Innenradius dadurch bestimmt wird, dass vom Radius eines Kreisabschnitts, der sich aufgrund der Laufzeit zwischen dem Aussenden des Messignals und dem Empfangen eines reflektierten Anteils dieses Messsignals ergibt, ein Fehlertoleranzmaß abgezogen wird und wobei der Außenradius dadurch bestimmt wird, dass zum Radius eines Kreisabschnitts, der sich aufgrund der Laufzeit zwischen dem Aussenden des Messignals und dem Empfangen eines reflektierten Anteils dieses Messsignals ergibt, ein Fehlertoleranzmaß addiert wird. Das Fehlertoleranzmaß kann beispielsweise die Standardabweichung der Fehlerverteilungsfunktion sein. Dadurch werden Objektabschnitte in einem kreisringsegmentförmigen Bereich beim Objekttracking berücksichtigt, wodurch die Robustheit des Verfahrens wesentlich gesteigert wird.

Gemäß einem Ausführungsbeispiel werden die beiden äußeren Kreisringabschnitte der Kette von unmittelbar aufeinanderfolgenden Kreisringabschnitten umfangsseitig dadurch beschränkt, dass sich der beschränkte Teilbereich zwischen einem Berührpunkt des Innenrands des äußeren Kreisringabschnitts mit einer zwischen dem Innenrand des äußeren Kreisringabschnitts und dem Außenrand des unmittelbar darauffolgenden Kreisringabschnitts verlaufenden Tangente und einem Schnittpunkt zwischen dem Außenrand des äußeren Kreisringabschnitts und dem Innenrand des unmittelbar darauffolgenden Kreisringabschnitts erstreckt. Durch diese Art der Beschränkung wird auch in Umfangsrichtung eine im Vergleich zu Kreisabschnitten etwas größere Abdeckung erreicht, was die Robustheit des Verfahrens steigert.

Gemäß einem Ausführungsbeispiel wird ein zwischen den beiden äußeren Kreisringabschnitten der Kette von unmittelbar aufeinanderfolgenden Kreisringabschnitten liegender innerer Kreisringabschnitt umfangsseitig dadurch beschränkt, dass sich der beschränkte Teilbereich zwischen einem Berührpunkt des Außenrands des inneren Kreisringabschnitts mit einer Tangente, die zwischen dem Außenrand des inneren Kreisringabschnitts und dem Innenrand des unmittelbar darauffolgenden, äußeren Kreisringabschnitts verläuft und einem Berührpunkt des Außenrands des inneren Kreisringabschnitts mit einer Tangente, die zwischen dem Außenrand des inneren Kreisringabschnitts und dem Innenrand des unmittelbar darauffolgenden, äußeren Kreisringabschnitts verläuft, erstreckt. Durch diese Art der Beschränkung werden die inneren Kreisringabschnitte der Kette von unmittelbar aufeinanderfolgenden Kreisringabschnitten relativ stark umfangsseitig eingegrenzt, wodurch ein sehr genaues Objekttracking bei gleichzeitig hoher Einsparung von Rechenkapazitäten erreicht wird.

Gemäß einem Ausführungsbeispiel ist der beschränkte Teilbereich des inneren Kreisringabschnitts kleiner als der beschränkte Teilbereich der beiden äußeren Kreisringabschnitte. Dadurch wird im inneren Bereich der Kette von unmittelbar aufeinanderfolgenden Kreisringabschnitten ein sehr genaues Objekttracking erreicht.

Gemäß einem Ausführungsbeispiel wird die Position und die zumindest abschnittsweise Form des Objekts mittels Tracking dadurch bestimmt, dass während der Bewegung des Fahrzeugs eine Vielzahl von Sende- und Empfangszyklen mittels der Sensorik vollzogen werden und geprüft wird, ob die ermittelten Teilbereiche auf einen zusammenhängenden Objektbereich mit in Draufsicht geraden und/oder konvex gekrümmten Objektabschnitten schließen lassen. Dadurch können typische Umgebungsobjekte, die nach Erkenntnissen des Erfinders in den allermeisten Fällen gerade und/oder konvex gekrümmte Objektabschnitte aufweisen, erkannt und in Form und Position sehr exakt detektiert werden.

Gemäß einem Ausführungsbeispiel wird die Position und die zumindest abschnittsweise Form des Objekts durch einen einzigen Sensor oder durch Zusammenwirken mehrerer an unterschiedlichen Positionen am Fahrzeug angeordneter Sensoren vollzogen. Bei Erfassung von Objekten seitlich neben dem Fahrzeug, d.h. nicht vor bzw. hinter dem Fahrzeug und damit nicht in bzw. entgegen der Fahrtrichtung, ist es möglich, bereits mittels Messungen eines einzelnen Sensors eine hinreichend gute Bestimmung von Position und Form eines Objektabschnitts zu erreichen.

Gemäß einem Ausführungsbeispiel wird zur Bestimmung der Position und der zumindest abschnittsweisen Form eines Objekts neben einem ersten Sensor ein weiterer Sensor herangezogen, der in Bezug auf die Bewegungsrichtung des Fahrzeugs quer zur Fahrtrichtung des Fahrzeugs neben dem ersten Sensor angeordnet ist. Durch diesen weiteren Sensor kann eine Symmetriebrechung erfolgen. Diese ist insbesondere dann vorteilhaft, wenn Objekte detektiert werden sollen, die in Bewegungsrichtung vor bzw. hinter dem Fahrzeug liegen, da in diesen Fahrsituationen auch bei lediglich örtlich eng begrenzten Objekten mehrere Kreisabschnitte bzw. Kreisringabschnitte entstehen, die keine exakte Objektlokalisierung zulassen.

Gemäß einem weiteren Aspekt betrifft die Erfindung ein System zur Bestimmung der Position und der zumindest abschnittsweisen Form eines Objekts im Umgebungsbereich eines Fahrzeugs. Das Fahrzeug umfasst eine Sensorik mit zumindest einem entfernungsmessenden Sensor und eine Recheneinheit zur Steuerung der Sensorik und Auswertung der Messinformationen, die durch die Sensorik bereitgestellt werden. Die Rechnereinheit ist dazu konfiguriert, die folgenden Schritte auszuführen:
- Durchführen mehrerer zeitlich aufeinanderfolgender Sende-Empfangszyklen durch die Sensorik, wobei jeder Sende-Empfangszyklus das Aussenden eines Messsignals durch zumindest einen Sensor und das Empfangen eines reflektierten Anteils dieses Messsignals durch einen Sensor umfasst;

- Bestimmen eines Kreisabschnitts oder Kreisringabschnitts, auf dem ein Objektabschnitt liegt, an dem eine Reflexion des Messsignals erfolgt, pro Sende-Empfangszyklus basierend auf der Laufzeit zwischen dem Aussenden des Messignals und dem Empfangen eines reflektierten Anteils dieses Messsignals und dem Erfassungsbereich des zumindest einen Sensors;
- Korrelieren von zumindest drei Kreisabschnitten oder Kreisringabschnitten einer Kette von unmittelbar aufeinanderfolgenden Kreisabschnitten oder Kreisringabschnitten und Bestimmen von jeweils zumindest einem Schnittpunkt und zumindest einer Tangente oder zwei Tangenten zwischen den direkt aufeinanderfolgenden Kreisabschnitten oder Kreisringabschnitten, wobei die unmittelbar aufeinanderfolgenden Kreisabschnitte oder Kreisringabschnitte auf Messungen aus unterschiedlichen Positionen basieren;
- Umfangsseitiges Beschränken der Kreisabschnitte oder Kreisringabschnitte auf Teilbereiche, in denen Objektabschnitt liegt, basierend auf den Schnittpunkten und den Tangenten; und
- Bestimmen der Position und der zumindest abschnittsweisen Form des Objekts basierend auf den Teilbereichen der Kreisabschnitte oder Kreisringabschnitte.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
Fig. 1 beispielhaft eine Draufsichtdarstellung eines Fahrzeugs mit einem Umgebungserfassungssystem, das mehrere Sensoren aufweist;
Fig. 2 beispielhaft eine schematische Darstellung von Kreisringen und Erfassungsbereichen eines oder mehrerer Sensoren, die an den Positionen p1 und p2 Umgebungsbereiche erfassen;
Fig. 3 beispielhaft und schematisch die Darstellung zweier Kreisabschnitte zu den Positionen p1 und p2 und die geometrische Eingrenzung der Kreisabschnitte basierend auf einer Tangente und dem Schnittpunkt der Kreisabschnitte;
Fig. 4 beispielhaft und schematisch die Darstellung zweier Kreisringabschnitte zu den Positionen p1 und p2 und die geometrische Eingrenzung der Kreisringabschnitte basierend auf einem Paar von Tangenten und den Schnittpunkten der Innen- bzw. Außenränder der Kreisringabschnitte;
Fig. 5 beispielhaft und schematisch die Darstellung zweier Kreisringabschnitte zu den Positionen p1 und p2 und die geometrische Eingrenzung der Kreisringabschnitte auf Teilbereiche mit den Winkeln α und β1;
Fig. 6 beispielhaft und schematisch die Darstellung zweier Kreisringabschnitte zu den Positionen p2 und p3 und die geometrische Eingrenzung der Kreisringabschnitte auf Teilbereiche mit den Winkeln β2 und γ;
Fig. 7 beispielhaft und schematisch die geometrische Eingrenzung der Kette von Kreisringabschnitten gemäß den Positionen p1, p2 und p3 aus den Figuren 5 und 6, wobei der innenliegende Kreisringabschnitt auf einen Winkel β umfangsseitig eingegrenzt wird, der sich aus der Schnittmenge der Winkel β1 und β2 ergibt;
Fig. 8 beispielhaft und schematisch das Tracking eines Objekts über eine Vielzahl von Messpositionen, wobei die Kreisringabschnitte die sich aus der Laufzeit des Messsignals und den Erfassungsbereichen des/der Sensoren ergebenden, möglichen Bereiche angeben, in denen ein Objektabschnitt ohne Einsatz des erfindungsgemäßen Verfahrens liegen kann;
Fig. 9 beispielhaft und schematisch das Tracking eines Objekts über eine Vielzahl von Messpositionen, wobei die gestrichelt gezeichneten, gekrümmten Linien Teilbereiche der Kreisringabschnitte gemäß Fig. 8 bilden, die sich aufgrund der Anwendung des erfindungsgemäßen Verfahrens ergeben; und
Fig. 10 beispielhaft ein Blockdiagramm, das die Verfahrensabläufe des Verfahrens zur Bestimmung der Position und der zumindest abschnittsweisen Form eines Objekts verdeutlicht.

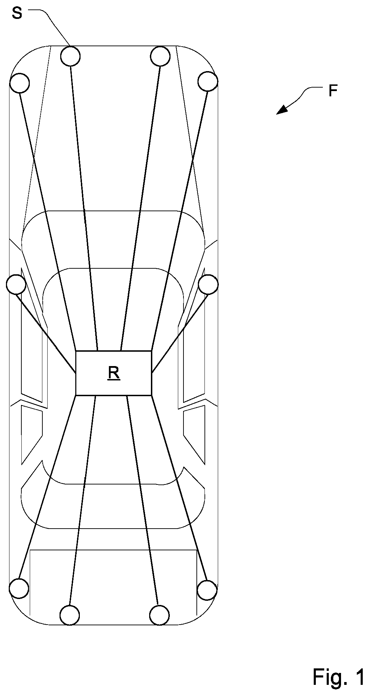

Figur 1 zeigt beispielhaft und grob schematisch ein Fahrzeug F, das eine Vielzahl von Sensoren S aufweist. Diese sind in Fig. 1 als Kreise angedeutet. Vorzugsweise weist das Fahrzeug F mehrere Sensoren S auf, die um das Fahrzeug F herum verteilt vorgesehen sind. Die Sensoren S können insbesondere entfernungsmessende Sensoren sein, beispielsweise Ultraschallsensoren. Alternativ können die Sensoren S auch Radarsensoren sein. Vorzugsweise weisen die Sensoren S jedoch nicht die Fähigkeit auf, die Richtung zu bestimmen, aus der ein empfangener, reflektierter Signalanteil des Sendesignals stammt. Derartige Sensoren werden häufig als 1-D-Sensoren bezeichnet. Die Bestimmung der Entfernung eines Objekts, an dem die Reflexion auftritt, kann basierend auf der Laufzeit zwischen dem Sendezeitpunkt und dem Empfangszeitpunkt erfolgen.

Die Sensoren sind mit einer Rechnereinheit R gekoppelt, die zumindest einen Prozessor und zumindest eine Speichereinheit aufweist. Diese Rechnereinheit R ist dazu ausgebildet, die in diesem Dokument offenbarten Verfahrensabläufe durchzuführen und damit die Position und die zumindest abschnittsweise Form eines Objekts zu bestimmen.

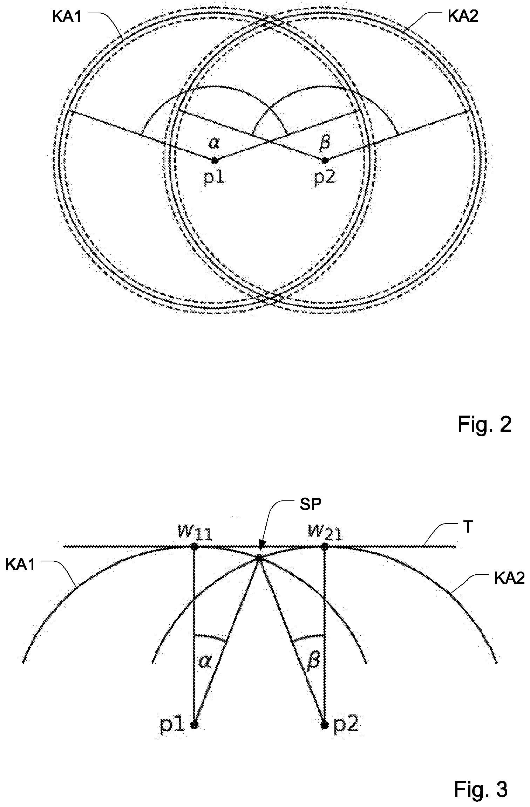

Fig. 2 zeigt grob schematisch das Vollziehen von zwei Messungen an den Positionen p1 und p2. Die Messungen können entweder durch einen einzigen Sensor S durchgeführt werden, der sich aufgrund der Fahrzeugbewegung an aufeinanderfolgenden Zeitpunkten an den Positionen p1 und p2 befindet. Alternativ können die Messungen aber auch von zwei Sensoren S des Fahrzeugs F durchgeführt werden, beispielsweise auch gleichzeitig, wobei die Sensoren S an unterschiedlichen Positionen angeordnet sind.

Wird bei entfernungsmessenden Sensoren S nach einer Laufzeit eine Reflexion empfangen, kann das Objekt, das diese Reflexion verursacht hat, auf einem Kreis um die Position p1, p2 des Sensors S liegen, wobei sich der Radius des Kreises aus der Laufzeit des Signals zwischen dem Aussenden des Signals und dem Empfangen des reflektierten Signals ergibt. Der durchgezogen gezeichnete Kreis in Fig. 2 gibt den Abstand an, den das Objekt zum Sensor gemäß der gemessenen Laufzeit hat.

Da der zumindest eine Sensor S einen Erfassungsbereich mit einem Erfassungswinkel α, β aufweist, lässt sich die Lage des reflektierenden Objekts zunächst auf einen Kreissektor mit dem Winkel α bzw. β gemäß Fig. 2 eingrenzen. In anderen Worten bedeutet dies, dass das reflektierende Objekt auf einem Kreisabschnitt KA1, KA2 des jeweiligen Kreises liegt, der umfangsseitig durch die Winkel α bzw. β begrenzt wird.

Neben dem durchgezogen gezeichneten Kreis in Fig. 2 sind zudem noch zwei weitere, gestrichelt gezeichnete Kreise gezeigt, wobei ein erster gestrichelter Kreis einen kleineren Radius aufweist als der durchgezogen gezeichnete Kreis und ein zweiter gestrichelter Kreis einen größeren Radius aufweist als der durchgezogen gezeichnete Kreis. Die Differenz der Radien der gestrichelt gezeichneten Kreise zu dem durchgezogen gezeichneten Kreis ergibt sich aufgrund von Messungenauigkeiten. Die Radiendifferenz ergibt sich beispielsweise aus der Standardabweichung der statistischen Verteilung, die sich aufgrund der Messungenauigkeiten ergibt. Unter Berücksichtigung der Messungenauigkeiten kann das reflektierende Objekt auf einem Kreisringabschnitt liegen, der umfangsseitig aufgrund des Erfassungsbereichs des Sensors S beschränkt ist (Winkel α, β) und in radialer Richtung durch einen Innenrand mit einem Innenradius, der dem ermittelten Radius abzüglich der Messungenauigkeit entspricht, und durch einen Außenrand mit einem dem Außenradius, der dem ermittelten Radius zuzüglich der Messungenauigkeit entspricht, begrenzt ist.

Fig. 3 zeigt schematisch die umfangsseitige Beschränkung der Kreisabschnitte KA1, KA2 auf Teilbereiche dieser Kreisabschnitte, um die benötigten Rechenressourcen für das Objekttracking zu reduzieren.

Ausgehend von den Kreisabschnitten KA1, KA2 um die beiden Positionen p1, p2 wird zunächst die gemeinsame Tangente T zu den beiden Kreisabschnitten gebildet. Die Tangente T berührt den ersten Kreisabschnitt KA1 in dem Berührpunkt w11 und den zweiten Kreisabschnitt KA2 im Berührpunkt w21.

Zudem wird der Schnittpunkt SP der Kreisabschnitte KA1, KA2 bestimmt. Basierend auf den Berührpunkten w11, w21 der Tangente T und dem Schnittpunkt SP der Kreisabschnitte KA1, KA2 können die Kreisabschnitte umfangsseitig auf Teilbereiche beschränkt werden, die beim Tracking eines Objekts als mögliche Reflexionsorte berücksichtigt werden. Dies ist in Bezug auf die Position p1 der Teilbereich des Kreisabschnitts KA1 zwischen den Punkten w11 und SP und in Bezug auf die Position p2 der Teilbereich des Kreisabschnitts KA2 zwischen den Punkten w21 und SP. Wie ein Vergleich der Winkel α und β aus den Figuren 2 und 3 ergibt, kann durch das angegebene geometrische Verfahren der Umfangsbereich, der für das Tracking des Objekts herangezogen wird, erheblich eingeschränkt werden.

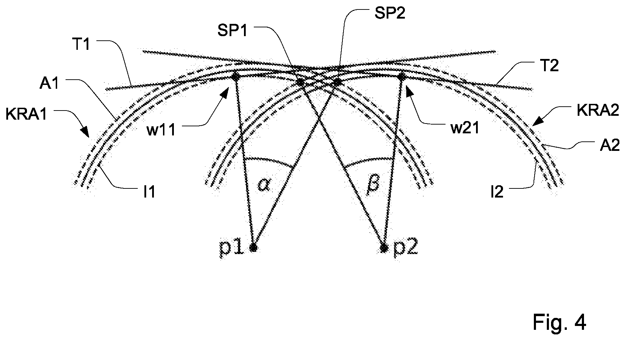

Fig. 4 zeigt die Erweiterung des Verfahrens zur umfangsseitigen Beschränkung auf Teilbereiche für den Fall, dass aufgrund der Berücksichtigung von Messungenauigkeiten anstelle der Kreisabschnitte von Kreisringabschnitten ausgegangen wird.

Im Unterschied zu dem Ausführungsbeispiel gemäß Fig. 3 wird nicht nur eine einzige Tangente T an die Kreisabschnitte KA1, KA2 gebildet, sondern eine erste und eine zweite Tangente T1, T2. Wie zuvor beschrieben, weisen die Kreisringabschnitte KRA1, KRA2 aufgrund der Berücksichtigung der Messungenauigkeiten einen Innenrand I1, I2 und einen Außenrand A1, A2 auf. Die Tangenten T1, T2 werden dadurch gebildet, dass jeweils die gemeinsamen Tangenten an den Innenrand I1, I2 des einen Kreisringabschnitts KRA1, KRA2 und den Außenrand A2, A1 des jeweils anderen Kreisringabschnitts KRA2, KRA1 gesucht werden. Die Berührpunkte w11, w21 dieser Tangenten T1, T2 mit dem Innenrand I1, I2 der Kreisringabschnitte KRA1, KRA2 werden jeweils für die umfangsseitige Beschränkung auf Teilbereiche der Kreisringabschnitte KRA1, KRA2 herangezogen.

Die Innenränder I1, I2 bzw. Außenränder A1, A2 der Kreisringabschnitte KRA1, KRA2 werden zudem auch für die Bestimmung der Schnittpunkte SP1, SP2 zwischen den Kreisringabschnitten KRA1, KRA2 herangezogen.

Die Schnittpunkte SP1, SP2 werden durch die Schnittpunkte des Innenrands I1, I2 des einen Kreisringabschnitts KRA1, KRA2 mit dem Außenrand A1, A2 des jeweils anderen Kreisringabschnitts KRA2, KRA1 gebildet. So liegt der Schnittpunkt SP1 dort, wo sich der Innenrand I1 des Kreisringabschnitts KRA1 mit dem Außenrand A2 des Kreisringabschnitts KRA2 schneidet. Der Schnittpunkt SP2 hingegen liegt dort, wo sich der Innenrand I2 des Kreisringabschnitts KRA2 mit dem Außenrand A1 des Kreisringabschnitts KRA1 schneidet.

Basierend auf den Berührpunkten w11, w21 der Tangenten T1, T2 und den Schnittpunkten SP1, SP2 der Innenränder I1, I2 der Kreisringabschnitte KRA1, KRA2 können die Kreisringabschnitte KRA1, KRA2 umfangsseitig auf Teilbereiche beschränkt werden, die beim Tracking eines Objekts als mögliche Reflexionsorte berücksichtigt werden. Dies ist in Bezug auf die Position p1 der Teilbereich des Kreisringabschnitts KRA1 zwischen den Punkten w11 und SP2 und in Bezug auf die Position p2 der Teilbereich des Kreisringabschnitts KRA2 zwischen den Punkten SP1 und w21.

Wie ein Vergleich der Figuren 3 und 4 ergibt, sind die zu den Teilbereichen gehörenden Winkel α und β etwas größer als die entsprechenden Winkel in Fig. 3.

Dadurch ergibt sich durch die Berücksichtigung der Messungenauigkeiten eine höhere Robustheit des Verfahrens.

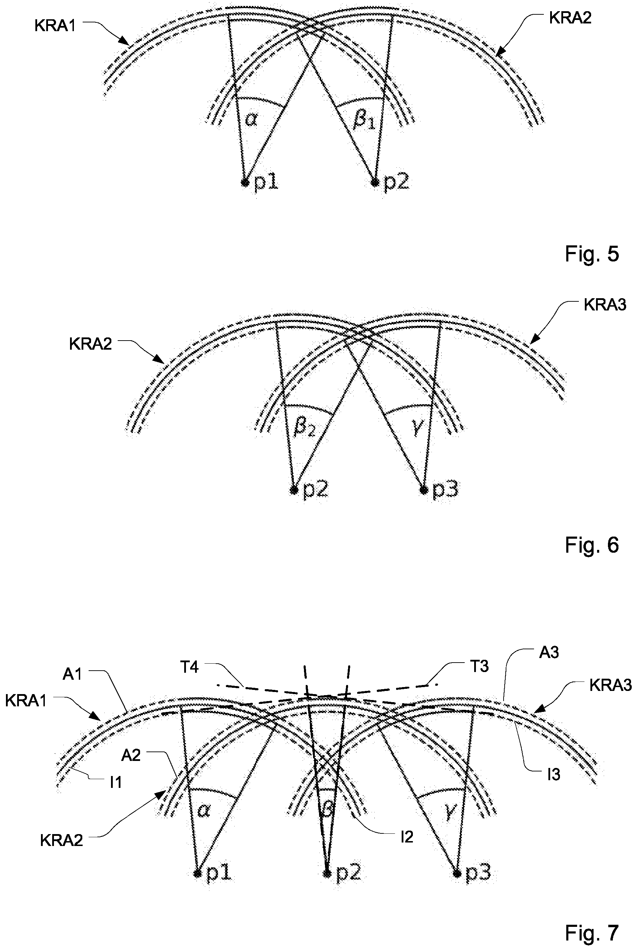

Fig. 5 bis 7 zeigen schematisch die Ermittlung der Position und der zumindest abschnittsweisen Form eines Objekts durch Korrelation von drei Kreisringabschnitten KRA1, KRA2, KRA3 und deren Beschränkung auf Teilbereiche.

Bei der Korrelation von drei oder mehr aufeinanderfolgenden Kreisringabschnitten KRA1, KRA2, KRA3 bilden zwei Kreisringabschnitte KRA1, KRA3 äußere Kreisringabschnitte und ein Kreisringabschnitt KRA2 einen inneren Kreisringabschnitt. Unter "aufeinanderfolgende Kreisringabschnitte" wird in diesem Zusammenhang verstanden, dass die Messungen, die zu den Kreisringabschnitten KRA1, KRA2, KRA3 führen, entweder von einem Sensor in direkt aufeinanderfolgenden Messzyklen erhalten wurden oder an einem Zeitpunkt von direkt benachbarten Sensoren durch Messungen ermittelt wurden.

Unter der Annahme, dass durch die Messungen an den Positionen p1, p2, p3 ein zusammenhängendes Objekt erfasst wurde, dessen von der Sensorik erfasster Objektbereich entweder gerade oder konvex gewölbt ist, kann der innere Kreisringabschnitt KRA2 umfangsseitig stärker eingeschränkt werden als die äußeren Kreisringabschnitte KRA1, KRA3, die unmittelbar seitlich an den inneren Kreisringabschnitt KRA2 angrenzen.

Fig. 5 und 6 zeigen die umfangsseitige Beschränkung der Kreisringabschnitte KRA1, KRA2 bzw. der Kreisringabschnitte KRA2, KRA3 dann, wenn, wie in Zusammenhang mit Fig. 4 beschrieben, lediglich zwei Messungen miteinander korreliert werden. Bezogen auf die Messung ausgehend von Position p2 ergibt sich bei Korrelation der Kreisringabschnitte KRA1 und KRA2 eine umfangsseitige Begrenzung auf einen Teilbereich mit dem Winkel β1 und - wiederum bezogen auf Position p2 - bei Korrelation der Kreisringabschnitte KRA2 und KRA3 eine umfangsseitige Begrenzung auf einen Teilbereich mit dem Winkel β2.

Unter der Annahme, dass die Messungen ausgehend von den Positionen p1, p2 und p3 genau ein zusammenhängendes Objekt detektieren, das entweder eine gerade oder eine konvex gewölbte Kontur aufweist, kann der Teilbereich des Kreisringabschnitts KRA2 sich nicht über den gesamten Winkelbereich zwischen β1 und β2 erstrecken, da dies zwangsläufig einer partielle konkaven Objektform bedürfen würde, sondern der Teilbereich des Kreisringabschnitts KRA2 kann auf den Winkelbereich reduziert werden, in dem sich die Winkel β1 und β2 überschneiden.

Wie in Fig. 7 zu erkennen, wird die umfangsseitige Reduzierung des inneren Kreisringabschnitts KRA2 auf einen reduzierten Teilbereich dadurch erreicht, dass eine gemeinsame Tangente T3 zwischen dem Innenrand I1 des ersten Kreisringabschnitts KRA1 mit dem Außenrand A2 des zweiten Kreisringabschnitts KRA2 gesucht wird. Der Berührpunkt dieser Tangente T3 mit dem Außenrand A2 des zweiten Kreisringabschnitts KRA2 bildet die erste umfangsseitige Begrenzung des Teilbereichs.

In gleicher Weise wird eine gemeinsame Tangente T4 zwischen dem Innenrand I3 des dritten Kreisringabschnitts KRA3 mit dem Außenrand A2 des zweiten Kreisringabschnitts KRA2 gesucht. Der Berührpunkt dieser Tangente T4 mit dem Außenrand A2 des zweiten Kreisringabschnitts KRA2 bildet die zweite umfangsseitige Begrenzung des Teilbereichs. Durch die Verbindung dieser Berührpunkte mit der Position p2 wird umfangsseitig der Teilbereich des zweiten, inneren Kreisringabschnitts KRA2 definiert (Winkel β).

Wie in Fig. 7 gezeigt, ist der zwischen zwei äußeren Kreisringabschnitten KRA1, KRA3 liegende Teilbereich des inneren Kreisringabschnitt KRA2, in dem eine Reflexion an dem Objekt erfolgt sein kann, radial sehr viel enger begrenzt als die Teilbereiche der äußeren Kreisringabschnitte KRA1, KRA3. Damit kann ein sehr genaues Objekttracking bei geringer Prozessorleistung vollzogen werden.

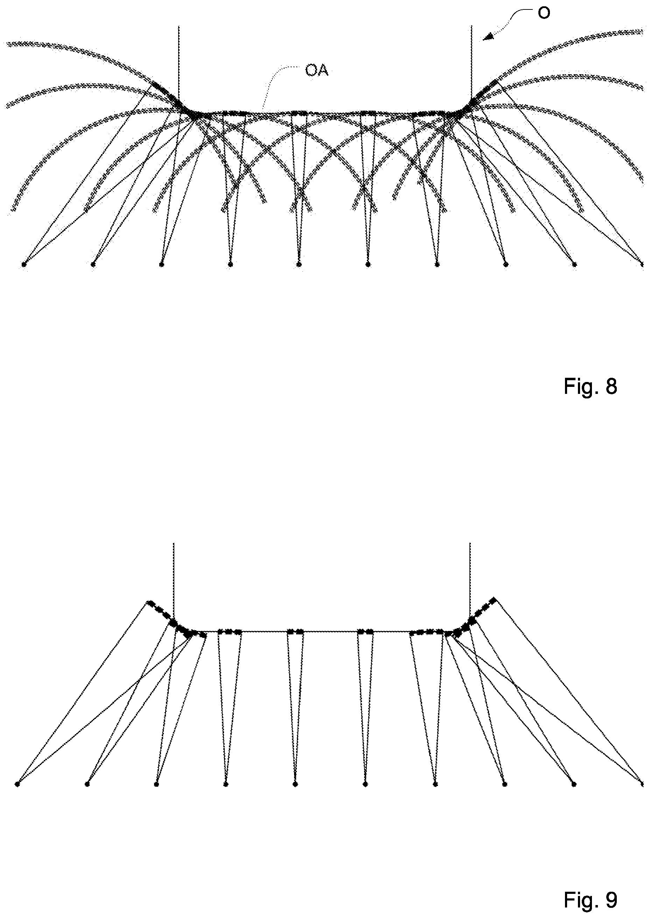

Fig. 8 zeigt die Erfassung der Position und der zumindest abschnittsweisen Form eines Objekts O über eine Vielzahl von Messzyklen. Das Objekt O kann beispielsweise ein stehendes Fahrzeug sein, das beim Vorbeifahren des Ego-Fahrzeugs, das das erfindungsgemäße Verfahren implementiert, erfasst wird.

Die Punkte am unteren Bildrand illustrieren die Positionen, von denen aus die Fahrzeugkontur erfasst wird. Die Kreisringabschnitte zeigen die Bereiche, in denen Objektbereiche theoretisch liegen können.

Fig. 9 zeigt die Darstellung gemäß Fig. 8, jedoch ohne die Kreisringabschnitte. Es sind lediglich die Teilbereiche der Kreisringabschnitte dargestellt, in denen der Objektabschnitt OA nach umfangsseitiger Eingrenzung der Kreisringabschnitte noch liegen kann. Es wird deutlich, dass durch die Vielzahl von Messungen insbesondere außerhalb der Eckbereiche des Objekts ein sehr exaktes Tracking der Objektkontur möglich ist.

Speziell bei der Detektion von Objekten in Fahrtrichtung kann es schwierig sein, mit einem Sensor allein eine hinreichend gute Lokalisierung des Objekt erreichen zu können.

In diesem Fall oder bei Mehrdeutigkeiten aufgrund von Symmetrieeffekten kann es vorteilhaft sein, neben Messungen mit einem ersten Sensor S Messungen mit zumindest einem weiteren Sensor S hinzuzunehmen. Der weitere Sensor S kann quer zur Fahrtrichtung seitlich neben dem ersten Sensor S angeordnet sein. Durch diesen weiteren Sensor S kann das Objekt O aus einer anderen Richtung lokalisiert und damit dessen Position besser bestimmt werden.

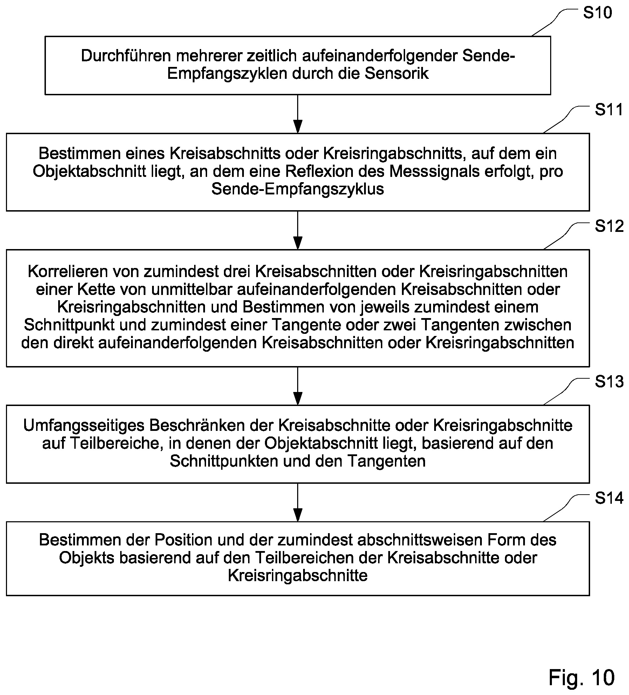

Fig. 10 zeigt ein Diagramm, das die Verfahrensschritte zur Bestimmung der Position und der zumindest abschnittsweisen Form eines Objekts verdeutlicht.

Zunächst werden mehrere zeitlich aufeinanderfolgende Sende-Empfangszyklen durch die Sensorik durchgeführt (S10). Jeder Sende-Empfangszyklus umfasst das Aussenden eines Messsignals durch zumindest einen Sensor und das Empfangen eines reflektierten Anteils dieses Messsignals durch den Sensor.

Anschließend werden pro Sende-Empfangszyklus jeweils ein Kreisabschnitt oder Kreisringabschnitt bestimmt, auf dem ein Objektabschnitt liegt, an dem eine Reflexion des Messsignals erfolgt. Die Bestimmung des Kreisabschnitts oder Kreisringabschnitts erfolgt basierend auf der Laufzeit zwischen dem Aussenden des Messignals und dem Empfangen eines reflektierten Anteils dieses Messsignals und dem Erfassungsbereich des zumindest einen Sensors (S11).

Daran anschließend werden zumindest drei Kreisabschnitte oder Kreisringabschnitte einer Kette von unmittelbar aufeinanderfolgenden Kreisabschnitten oder Kreisringabschnitten korreliert, wobei die unmittelbar aufeinanderfolgenden Kreisabschnitte oder Kreisringabschnitte auf Messungen aus unterschiedlichen Positionen basieren. Zudem werden jeweils zumindest ein Schnittpunkt und zumindest eine Tangente oder zwei Tangenten zwischen den direkt aufeinanderfolgenden Kreisabschnitten oder Kreisringabschnitten bestimmt (S12).

Anschließend werden die Kreisabschnitte oder Kreisringabschnitte umfangsseitig auf Teilbereiche beschränkt, in denen der Objektabschnitt liegt, und zwar basierend auf den Schnittpunkten und den Tangenten (S13).

Zuletzt wird die Position und die zumindest abschnittsweise Form des Objekts basierend auf den Teilbereichen der Kreisabschnitte oder Kreisringabschnitte bestimmt (S14).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- A1, A2, A3: Außenrand
- F: Fahrzeug
- I1, I2, I3: Innenrand
- KA1, KA2, KA3: Kreisabschnitt
- KRA1, KRA2, KRA3: Kreisringabschnitt
- O: Objekt
- OA: Objektabschnitt
- P1, P2, P3: Position
- R: Recheneinheit
- S: Sensor
- SP, SP1, SP2: Schnittpunkt
- T, T1, T2, T3, T4: Tangente
- w11: Berührpunkt
- w12: Berührpunkt

## Patentansprüche

1. Verfahren zur Bestimmung der Position und der zumindest abschnittsweisen Form eines Objekts (O) durch eine Sensorik eines Fahrzeugs (F), wobei die Sensorik des Fahrzeugs (F) zumindest einen entfernungsmessenden Sensor (S) aufweist, wobei das Verfahren die folgenden Schritte aufweist:
- Durchführen mehrerer zeitlich aufeinanderfolgender Sende-Empfangszyklen durch die Sensorik (S10), wobei jeder Sende-Empfangszyklus das Aussenden eines Messsignals durch zumindest einen Sensor (S) und das Empfangen eines reflektierten Anteils dieses Messsignals durch einen Sensor (S) umfasst;
- Bestimmen eines Kreisabschnitts (KA1, KA2) oder Kreisringabschnitts (KRA1, KRA2, KRA3), auf dem ein Objektabschnitt (OA) liegt, an dem eine Reflexion des Messsignals erfolgt, pro Sende-Empfangszyklus basierend auf der Laufzeit zwischen dem Aussenden des Messignals und dem Empfangen eines reflektierten Anteils dieses Messsignals und dem Erfassungsbereich des zumindest einen Sensors (S) (S11);
- Korrelieren von zumindest drei Kreisabschnitten oder Kreisringabschnitten (KRA1, KRA2, KRA3) einer Kette von unmittelbar aufeinanderfolgenden Kreisabschnitten oder Kreisringabschnitten (KRA1, KRA2, KRA3) und Bestimmen von jeweils zumindest einem Schnittpunkt (SP) und zumindest einer Tangente (T) oder zwei Tangenten (T1, T2, T3, T4) zwischen den direkt aufeinanderfolgenden Kreisabschnitten (KA1, KA2) oder Kreisringabschnitten (KRA1, KRA2, KRA3) (S12), wobei die unmittelbar aufeinanderfolgenden Kreisabschnitte oder Kreisringabschnitte (KRA1, KRA2, KRA3) auf Messungen aus unterschiedlichen Positionen (p1, p2, p3) basieren; wobei das Verfahren durch die folgenden Schritte gekennzeichnet ist:
- Umfangsseitiges Beschränken der Kreisabschnitte oder Kreisringabschnitte (KRA1, KRA2, KRA3) auf Teilbereiche, in denen der Objektabschnitt (OA) liegt, basierend auf den Schnittpunkten (SP, SP1, SP2) und den Tangenten (T, T1, T2, T3, T4) (S13); und
- Bestimmen der Position und der zumindest abschnittsweisen Form des Objekts (O) basierend auf den Teilbereichen der Kreisabschnitte (KA1, KA2) oder Kreisringabschnitte (KRA1, KRA2, KRA3) (S14).

2. Verfahren nach Anspruch 1, **dadurch gekennzeichnet, dass** ein äußerer Kreisabschnitt oder Kreisringabschnitt (KRA1, KRA3) der Kette von unmittelbar aufeinanderfolgenden Kreisabschnitten oder Kreisringabschnitten (KRA1, KRA2, KRA3) umfangsseitig dadurch beschränkt wird, dass sich der beschränkte Teilbereich zwischen einem Berührpunkt (w11, w21) des äußeren Kreisabschnitts oder Kreisringabschnitts (KRA1, KRA3) mit einer zwischen dem äußeren Kreisabschnitt oder Kreisringabschnitt (KRA1, KRA3) und dem unmittelbar darauffolgenden Kreisabschnitt oder Kreisringabschnitt (KRA2) verlaufenden Tangente (T) und einem Schnittpunkt (SP) zwischen dem äußeren Kreisabschnitt oder Kreisringabschnitt (KRA1, KRA3) und dem unmittelbar darauffolgenden Kreisabschnitt oder Kreisringabschnitt (KRA2) erstreckt.

3. Verfahren nach Anspruch 1 oder 2, **dadurch gekennzeichnet, dass** der Kreisringabschnitt (KRA1, KRA2, KRA3) einen Innenradius und einen Außenradius aufweist, wobei der Innenradius dadurch bestimmt wird, dass vom Radius eines Kreisabschnitts, der sich aufgrund der Laufzeit zwischen dem Aussenden des Messignals und dem Empfangen eines reflektierten Anteils dieses Messsignals ergibt, ein Fehlertoleranzmaß abgezogen wird und wobei der Außenradius dadurch bestimmt wird, dass zum Radius eines Kreisabschnitts, der sich aufgrund der Laufzeit zwischen dem Aussenden des Messignals und dem Empfangen eines reflektierten Anteils dieses Messsignals ergibt, ein Fehlertoleranzmaß addiert wird.

4. Verfahren nach einem der vorhergehenden Ansprüche, **dadurch gekennzeichnet, dass** die beiden äußeren Kreisringabschnitte (KRA1, KRA3) der Kette von unmittelbar aufeinanderfolgenden Kreisringabschnitten (KRA1, KRA2, KRA3) umfangsseitig dadurch beschränkt werden, dass sich der beschränkte Teilbereich zwischen einem Berührpunkt des Innenrands (I1, I3) des äußeren Kreisringabschnitts (KRA1, KRA3) mit einer zwischen dem Innenrand (I1, I3) des äußeren Kreisringabschnitts (KRA1, KRA3) und dem Außenrand (A2) des unmittelbar darauffolgenden Kreisringabschnitts (KRA2) verlaufenden Tangente (T3, T4) und einem Schnittpunkt zwischen dem Außenrand (A1, A3) des äußeren Kreisringabschnitts (KRA1, KRA3) und dem Innenrand (I2) des unmittelbar darauffolgenden Kreisringabschnitts (KRA2) erstreckt.

5. Verfahren nach einem der vorhergehenden Ansprüche, **dadurch gekennzeichnet, dass** ein zwischen den beiden äußeren Kreisringabschnitten (KRA1, KRA3) der Kette von unmittelbar aufeinanderfolgenden Kreisringabschnitten (KRA1, KRA2, KRA3) liegender innerer Kreisringabschnitt (KRA2) umfangsseitig dadurch beschränkt wird, dass sich der beschränkte Teilbereich zwischen einem Berührpunkt des Außenrands (A2) des inneren Kreisringabschnitts (KRA2) mit einer Tangente (T3), die zwischen dem Außenrand (A2) des inneren Kreisringabschnitts (KRA2) und dem Innenrand (I1) des unmittelbar darauffolgenden, äußeren Kreisringabschnitts (KRA1) verläuft und einem Berührpunkt des Außenrands (A2) des inneren Kreisringabschnitts (KRA2) mit einer Tangente (T4), die zwischen dem Außenrand (A2) des inneren Kreisringabschnitts (KRA2) und dem Innenrand (I2) des unmittelbar darauffolgenden, äußeren Kreisringabschnitts (KRA3) verläuft, erstreckt.

6. Verfahren nach einem der vorhergehenden Ansprüche, **dadurch gekennzeichnet, dass** der beschränkte Teilbereich des inneren Kreisringabschnitts (KRA2) kleiner ist als der beschränkte Teilbereich der beiden äußeren Kreisringabschnitte (KRA1, KRA3).

7. Verfahren nach einem der vorhergehenden Ansprüche, **dadurch gekennzeichnet, dass** die Position und die zumindest abschnittsweise Form des Objekts (O) mittels Tracking dadurch bestimmt wird, dass während der Bewegung des Fahrzeugs (F) eine Vielzahl von Sende- und Empfangszyklen mittels der Sensorik vollzogen werden und geprüft wird, ob die ermittelten Teilbereiche auf einen zusammenhängenden Objektbereich mit in Draufsicht geraden und/oder konvex gekrümmten Objektabschnitten schließen lassen.

8. Verfahren nach einem der vorhergehenden Ansprüche, **dadurch gekennzeichnet, dass** die Position und die zumindest abschnittsweise Form des Objekts (O) durch einen einzigen Sensor (S) oder durch Zusammenwirken mehrerer an unterschiedlichen Positionen am Fahrzeug (F) angeordneter Sensoren (S) vollzogen wird.

9. Verfahren nach einem der vorhergehenden Ansprüche, **dadurch gekennzeichnet, dass** zur Bestimmung der Position und der zumindest abschnittsweisen Form eines Objekts (O) neben einem ersten Sensor ein weiterer Sensor herangezogen wird, der in Bezug auf die Bewegungsrichtung des Fahrzeugs (F) quer zur Fahrtrichtung des Fahrzeugs (F) neben dem ersten Sensor angeordnet ist.

10. System zur Bestimmung der Position und der zumindest abschnittsweisen Form eines Objekts (O) im Umgebungsbereich eines Fahrzeugs (F) umfassend eine Sensorik mit zumindest einem entfernungsmessenden Sensor (S) und eine Recheneinheit (R) zur Steuerung der Sensorik und Auswertung der Messinformationen, die durch die Sensorik bereitgestellt werden, wobei die Rechnereinheit (R) dazu konfiguriert ist, die folgenden Schritte auszuführen:
- Durchführen mehrerer zeitlich aufeinanderfolgender Sende-Empfangszyklen durch die Sensorik, wobei jeder Sende-Empfangszyklus das Aussenden eines Messsignals durch zumindest einen Sensor (S) und das Empfangen eines reflektierten Anteils dieses Messsignals durch einen Sensor (S) umfasst;
- Bestimmen eines Kreisabschnitts (KA1, KA2) oder Kreisringabschnitts (KRA1, KRA2, KRA3), auf dem ein Objektabschnitt (OA) liegt, an dem eine Reflexion des Messsignals erfolgt, pro Sende-Empfangszyklus basierend auf der Laufzeit zwischen dem Aussenden des Messignals und dem Empfangen eines reflektierten Anteils dieses Messsignals und dem Erfassungsbereich des zumindest einen Sensors (S);
- Korrelieren von zumindest drei Kreisabschnitten oder Kreisringabschnitten (KRA1, KRA2, KRA3) einer Kette von unmittelbar aufeinanderfolgenden Kreisabschnitten oder Kreisringabschnitten (KRA1, KRA2, KRA3) und Bestimmen von jeweils zumindest einem Schnittpunkt (S, SP1, SP2) und zumindest einer Tangente (T, T1, T2) oder zwei Tangenten (T3, T4) zwischen den direkt aufeinanderfolgenden Kreisabschnitten oder Kreisringabschnitten (KRA1, KRA2, KRA3), wobei die unmittelbar aufeinanderfolgenden Kreisabschnitte oder Kreisringabschnitte (KRA1, KRA2, KRA3) auf Messungen aus unterschiedlichen Positionen (p1, p2, p3) basieren;
**gekennzeichnet dadurch, dass** die Recheneinheit weiter dazu konfiguriert ist, die folgenden Schritte auszuführen:
- Umfangsseitiges Beschränken der Kreisabschnitte oder Kreisringabschnitte (KRA1, KRA2, KRA3) auf Teilbereiche, in denen Objektabschnitt (OA) liegt, basierend auf den Schnittpunkten (S, SP1, SP2) und den Tangenten (T, T1, T2, T3, T4); und
- Bestimmen der Position und der zumindest abschnittsweisen Form des Objekts (O) basierend auf den Teilbereichen der Kreisabschnitte oder Kreisringabschnitte (KRA1, KRA2, KRA3).

## Claims

1. A method for determining the position and at least sections of the shape of an object (O) by a sensor system of a vehicle (F), wherein the sensor system of the vehicle (F) has at least one distance-measuring sensor (S), wherein the method comprises the following steps:
- performing multiple consecutive transmit-receive cycles by the sensor system (S10), wherein each transmit-receive cycle comprises the transmission of a measurement signal by at least one sensor (S) and the reception of a reflected portion of this measurement signal by a sensor (S);
- determining a circular section (KA1, KA2) or circular ring section (KRA1, KRA2, KRA3) on which an object section (OA) is located on which a reflection of the measurement signal occurs, per transmit-receive cycle based on the transit time between the transmission of the measurement signal and the reception of a reflected portion of this measurement signal and on the detection range of at least one sensor (S) (S11);
- correlating at least three circular sections or circular ring sections (KRA1, KRA2, KRA3) of a chain of immediately consecutive circular sections or circular ring sections (KRA1, KRA2, KRA3) and determining at least one intersection point (SP) and at least one tangent (T) or two tangents (T1, T2, T3, T4) between the directly consecutive circular sections (KA1, KA2) or circular ring sections (KRA1, KRA2, KRA3) (S12), wherein the immediately consecutive circular sections or circular ring sections (KRA1, KRA2, KRA3) are based on measurements from different positions (p1, p2, p3);
wherein the method is **characterised by** the following steps:
- circumferentially limiting the circular sections or circular ring sections (KRA1, KRA2, KRA3) to sub-areas in which the object section (OA) is located, based on the intersection points (SP, SP1, SP2) and the tangents (T, T1, T2, T3, T4) (S13); and
- determining the position and at least sections of the shape of the object (O) based on the sub-areas of the circular sections (KA1, KA2) or circular ring sections (KRA1, KRA2, KRA3) (S14).

2. The method of claim 1, **characterised in that** an outer circular section or circular ring section (KRA1, KRA3) of the chain of immediately consecutive circular sections or circular ring sections (KRA1, KRA2, KRA3) is circumferentially limited **in that** the limited sub-area between a point of contact (w11, w21) of the outer circular section or circular ring section (KRA1, KRA3) with a tangent (T) extending between the outer circular section or circular ring section (KRA1, KRA3) and the immediately consecutive circular section or circular ring section (KRA2) and an intersection point (SP) between the outer circular section or circular ring section (KRA1, KRA3) and the immediately consecutive circular section or circular ring section (KRA2).

3. The method of claim 1 or 2, **characterised in that** the circular ring section (KRA1, KRA2, KRA3) has an inner radius and an outer radius, wherein the inner radius is determined by subtracting a margin of error from the radius of a circular portion section from the transit time between the transmission of the measurement signal and the reception of a reflected portion of said measurement signal, and wherein the outer radius is determined by adding a margin of error to the radius of a circular section resulting from the transit time between the transmission of the measurement signal and the reception of a reflected portion of said measurement signal.

4. The method according to any one of the preceding claims, **characterised in that** the circumferential circumference of the two outer circular ring sections (KRA1, KRA3) of the chain of immediately consecutive circular ring sections (KRA1, KRA2, KRA3) is circumferential by the fact that the restricted partial region between a point of contact of the inner edge (11, I3) of the outer circular ring section (KRA1, KRA3) is connected between the inner edge (I1, I3) of the outer circular ring section (KRA1, KRA3) and the outer edge (A2) of the immediately consecutive circular ring section (KRA2) (T3, T4) and an intersection point between the outer edge (A1, A3) of the outer circular ring section (KRA1, KRA3) and the inner edge (I2) of the immediately consecutive circular ring section (KRA2).

5. The method according to any one of the preceding claims, **characterised in that** an inner circular ring section (KRA2) located between the two outer circular ring sections (KRA1, KRA3) of the chain of immediately consecutive circular ring sections (KRA1, KRA2, KRA3) is circumferentially limited **in that** the limited sub-area extends between a point of contact of the outer edge (A2) of the inner circular ring section (KRA2) with a tangent (T3) extending between the outer edge (A2) of the inner circular ring section (KRA2) and the inner edge (11) of the immediately consecutive outer circular ring section (KRA1) and a point of contact of the outer edge (A2) of the inner circular ring section (KRA2) with a tangent (T4) extending between the outer edge (A2) of the inner circular ring section (KRA2) and the inner edge (I2) of the immediately consecutive outer circular ring section (KRA3).

6. The method according to any one of the preceding claims, **characterised in that** the limited sub-area of the inner circular ring portion (KRA2) is smaller than the limited sub-area of the two outer circular ring portions (KRA1, KRA3).

7. The method according to any one of the preceding claims, **characterised in that** the position and at least sections of the shape of the object (O) is determined by means of tracking **in that**, during the movement of the vehicle (F), a plurality of transmit and receive cycles are performed by means of the sensor system and by checking whether the determined sub-areas indicate a contiguous object area with straight and/or convexly curved object sections in plan view.

8. The method according to any one of the preceding claims, **characterised in that** the position and at least sections of the shape of the object (O) are performed by a single sensor (S) or by the interaction of multiple sensors (S) arranged at different positions on the vehicle (F).

9. The method according to any one of the preceding claims, **characterised in that**, in order to determine the position and at least sections of the shape of an object (O), a further sensor is used in addition to a first sensor, which further sensor is arranged transversely to the direction of travel of the vehicle (F) next to the first sensor with respect to the direction of movement of the vehicle (F).

10. A system for determining the position and at least sections of the shape of an object (O) in the surrounding area of a vehicle (F) comprising a sensor system with at least one distance-measuring sensor (S) and a computing unit (R) for controlling the sensors and evaluating the measurement information provided by the sensors, wherein the computing unit (R) is configured to perform the following steps:
- performing multiple consecutive transmit-receive cycles by the sensor system, wherein each transmit-receive cycle comprises the transmission of a measurement signal by at least one sensor (S) and the reception of a reflected portion of this measurement signal by a sensor (S);
- determining a circular section (KA1, KA2) or circular ring section (KRA1, KRA2, KRA3) on which an object section (OA) is located on which a reflection of the measurement signal occurs, per transmit-receive cycle based on the transit time between the transmission of the measurement signal and the reception of a reflected portion of this measurement signal and on the detection range of at least one sensor (S);
- correlating at least three circular sections or circular ring sections (KRA1, KRA2, KRA3) of a chain of immediately consecutive circular sections or circular ring sections (KRA1, KRA2, KRA3) and determining at least one intersection point (S, SP1, SP2) and at least one tangent (T, T1, T2) or two tangents (T3, T4) between the directly consecutive circular sections or circular ring sections (KRA1, KRA2, KRA3), wherein the immediately consecutive circular sections or circular ring sections (KRA1, KRA2, KRA3) are based on measurements from different positions (p1, p2, p3);
**characterised in that** the computing unit is further configured to perform the following steps:
- circumferentially limiting the circular sections or circular ring sections (KRA1, KRA2, KRA3) to sub-areas in which the object section (OA) is located, based on the intersection points (S, SP1, SP2) and the tangents (T, T1, T2, T3, T4); and
- determining the position and at least sections of the shape of the object (O) based on the sub-areas of the circular sections or circular ring sections (KRA1, KRA2, KRA3).

## Revendications

1. Procédé de détermination de la position et de la forme, au moins par sections, d'un objet (O) au moyen d'un dispositif de détection d'un véhicule (F), dans lequel le dispositif de détection du véhicule (F) présente au moins un capteur de mesure de distance (S), dans lequel le procédé comprend les étapes suivantes :
- l'exécution de plusieurs cycles d'émission-réception se succédant dans le temps par le dispositif de détection (S10), dans lequel chaque cycle d'émission-réception comprend l'émission d'un signal de mesure par au moins un capteur (S) et la réception d'une partie réfléchie de ce signal de mesure par un capteur (S) ;
- la détermination, pour chaque cycle d'émission-réception, d'une section de cercle (KA1, KA2) ou d'une section de couronne circulaire (KRA1, KRA2, KRA3) sur lequel est situé un tronçon d'objet (OA) au niveau duquel se produit une réflexion du signal de mesure, sur la base du temps de propagation entre l'émission du signal de mesure et la réception d'une partie réfléchie de ce signal de mesure ainsi que de la zone de détection de l'au moins un capteur (S) (S11) ;
- la corrélation d'au moins trois sections de cercle ou sections de couronne circulaire (KRA1, KRA2, KRA3) d'une chaîne de sections de cercle ou de sections de couronne circulaire (KRA1, KRA2, KRA3) se succédant immédiatement, et la détermination, dans chaque cas, d'au moins un point d'intersection (SP) et d'au moins une tangente (T) ou de deux tangentes (T1, T2, T3, T4) entre les sections de cercle (KA1, KA2) ou les sections de couronne circulaire (KRA1, KRA2, KRA3) se succédant immédiatement (S12), dans lequel les sections de cercle ou sections de couronne circulaire (KRA1, KRA2, KRA3) se succédant immédiatement sont fondées sur des mesures effectuées à partir de positions différentes (p1, p2, p3) ; dans lequel le procédé est **caractérisé par** les étapes suivantes :
- la limitation, du côté de la circonférence, des sections de cercle ou des sections de couronne circulaire (KRA1, KRA2, KRA3) à des zones partielles dans lesquelles est situé le tronçon d'objet (OA), sur la base des points d'intersection (SP, SP1, SP2) et des tangentes (T, T1, T2, T3, T4) (S13) ; et
- la détermination de la position et de la forme, au moins par sections, de l'objet (O) sur la base des zones partielles des sections de cercle (KA1, KA2) ou des sections de couronne circulaire (KRA1, KRA2, KRA3) (S14).

2. Procédé selon la revendication 1, **caractérisé en ce qu'**une section de cercle ou section de couronne circulaire extérieure (KRA1, KRA3) de la chaîne de sections de cercle ou de sections de couronne circulaire (KRA1, KRA2, KRA3) se succédant immédiatement est limité du côté de la circonférence **en ce que** la zone partielle limitée s'étend entre un point de tangence (w11, w21) de la section de cercle ou de la section de couronne circulaire extérieure (KRA1, KRA3) avec une tangente (T) s'étendant entre la section de cercle ou section de couronne circulaire extérieure (KRA1, KRA3) et la section de cercle ou section de couronne circulaire (KRA2) qui le suit immédiatement, et un point d'intersection (SP) entre la section de cercle ou section de couronne circulaire extérieure (KRA1, KRA3) et la section de cercle ou section de couronne circulaire (KRA2) qui le suit immédiatement.

3. Procédé selon la revendication 1 ou 2, **caractérisé en ce que** la section de couronne circulaire (KRA1, KRA2, KRA3) présente un rayon intérieur et un rayon extérieur, dans lequel le rayon intérieur est déterminé par la soustraction d'une valeur de tolérance d'erreur du rayon d'une section de cercle résultant du temps de propagation entre l'émission du signal de mesure et la réception d'une partie réfléchie de ce signal de mesure, et dans lequel le rayon extérieur est déterminé par l'ajout d'une valeur de tolérance d'erreur au rayon d'une section de cercle résultant du temps de propagation entre l'émission du signal de mesure et la réception d'une partie réfléchie de ce signal de mesure.

4. Procédé selon l'une quelconque des revendications précédentes, **caractérisé en ce que** les deux sections de couronne circulaire extérieures (KRA1, KRA3) de la chaîne de sections de couronne circulaire (KRA1, KRA2, KRA3) se succédant immédiatement sont limitées du côté de la circonférence **en ce que** la zone partielle limitée s'étend entre un point de tangence du bord intérieur (I1, I3) de la section de couronne circulaire extérieure (KRA1, KRA3) avec une tangente (T3, T4) s'étendant entre le bord intérieur (I1, I3) de la section de couronne circulaire extérieure (KRA1, KRA3) et le bord extérieur (A2) de la section de couronne circulaire (KRA2) qui le suit immédiatement, et un point d'intersection entre le bord extérieur (A1, A3) de la section de couronne circulaire extérieure (KRA1, KRA3) et le bord intérieur (I2) de la section de couronne circulaire (KRA2) qui le suit immédiatement.

5. Procédé selon l'une quelconque des revendications précédentes, **caractérisé en ce qu'**une section de couronne circulaire intérieure (KRA2), située entre les deux sections de couronne circulaire extérieures (KRA1, KRA3) de la chaîne de sections de couronne circulaire (KRA1, KRA2, KRA3) se succédant immédiatement, est limitée du côté de la circonférence **en ce que** la zone partielle limitée s'étend entre un point de tangence du bord extérieur (A2) de la section de couronne circulaire intérieure (KRA2) avec une tangente (T3) qui s'étend entre le bord extérieur (A2) de la section de couronne circulaire intérieure (KRA2) et le bord intérieur (11) de la section de couronne circulaire extérieure (KRA1) qui suit immédiatement, et un point de tangence du bord extérieur (A2) de la section de couronne circulaire intérieure (KRA2) avec une tangente (T4) qui s'étend entre le bord extérieur (A2) de la section de couronne circulaire intérieure (KRA2) et le bord intérieur (I2) de la section de couronne circulaire extérieure (KRA3) qui suit immédiatement.

6. Procédé selon l'une quelconque des revendications précédentes, **caractérisé en ce que** la zone partielle limitée de la section de couronne circulaire intérieure (KRA2) est plus petite que la zone partielle limitée des deux sections de couronne circulaire extérieures (KRA1, KRA3).

7. Procédé selon l'une quelconque des revendications précédentes, **caractérisé en ce que** la position et la forme, au moins sur certaines sections, de l'objet (O) sont déterminées au moyen d'un suivi, **en ce que**, pendant le déplacement du véhicule (F), une pluralité de cycles d'émission et de réception est effectuée au moyen du dispositif de détection et **en ce qu'**il est vérifié si les zones partielles déterminées permettent de conclure à une région d'objet continue présentant, en vue de dessus, des sections d'objet rectilignes et/ou courbées de manière convexe.

8. Procédé selon l'une quelconque des revendications précédentes, **caractérisé en ce que** la détermination de la position et de la forme, au moins sur certaines sections, de l'objet (O) est effectuée au moyen d'un seul capteur (S) ou par l'action conjointe de plusieurs capteurs (S) disposés à différentes positions sur le véhicule (F).

9. Procédé selon l'une quelconque des revendications précédentes, **caractérisé en ce que**, pour la détermination de la position et de la forme, au moins sur certaines sections, d'un objet (O), il est fait appel, outre à un premier capteur, à un autre capteur qui est disposé latéralement par rapport au premier capteur, transversalement à la direction de déplacement du véhicule (F) par rapport à la direction de marche du véhicule (F).

10. Système de détermination de la position et de la forme au moins par sections d'un objet (O) dans l'environnement d'un véhicule (F), comprenant un dispositif de détection avec au moins un capteur de mesure de distance (S) et une unité de calcul (R) pour commander le dispositif de détection et évaluer les informations de mesure fournies par le dispositif de détection, dans lequel l'unité de calcul (R) est configurée pour effectuer les étapes suivantes :
- l'exécution de plusieurs cycles d'émission-réception se succédant dans le temps par le dispositif de détection, dans lequel chaque cycle d'émission-réception comprend l'émission d'un signal de mesure par au moins un capteur (S) et la réception d'une partie réfléchie de ce signal de mesure par un capteur (S) ;
- la détermination, pour chaque cycle d'émission-réception, d'une section de cercle (KA1, KA2) ou d'une section de couronne circulaire (KRA1, KRA2, KRA3) sur lequel est situé un tronçon d'objet (OA) au niveau duquel se produit une réflexion du signal de mesure, sur la base du temps de propagation entre l'émission du signal de mesure et la réception d'une partie réfléchie de ce signal de mesure ainsi que de la zone de détection de l'au moins un capteur (S) ;
- la corrélation d'au moins trois sections de cercle ou sections de couronne circulaire (KRA1, KRA2, KRA3) d'une chaîne de sections de cercle ou de sections de couronne circulaire (KRA1, KRA2, KRA3) se succédant immédiatement, et la détermination, dans chaque cas, d'au moins un point d'intersection (S, SP1, SP2) et d'au moins une tangente (T, T1, T2) ou de deux tangentes (T3, T4) entre les sections de cercle ou les sections de couronne circulaire (KRA1, KRA2, KRA3) se succédant immédiatement, dans lequel les sections de cercle ou sections de couronne circulaire (KRA1, KRA2, KRA3) se succédant immédiatement sont fondées sur des mesures effectuées à partir de positions différentes (p1, p2, p3) ; **caractérisé en ce que** l'unité de calcul est en outre configurée pour effectuer les étapes suivantes :
- la limitation, du côté de la circonférence, des sections de cercle ou des sections de couronne circulaire (KRA1, KRA2, KRA3) à des zones partielles dans lesquelles est situé le tronçon d'objet (OA), sur la base des points d'intersection (S, SP1, SP2) et des tangentes (T, T1, T2, T3, T4) ; et
- la détermination de la position et de la forme, au moins par sections, de l'objet (O) sur la base des zones partielles des sections de cercle ou des sections de couronne circulaire (KRA1, KRA2, KRA3).
